# EUROPÄISCHE PATENTANMELDUNG

(11) **EP 1 816 644 A1**
(43) Veröffentlichungstag der Anmeldung: **08.08.2007**
(21) Anmeldenummer: 05745202.1
(22) Anmeldetag: 12.04.2005
(51) Int. Cl.: G11B 9/08

(54) **VERFAHREN ZUM AUFZEICHNEN UND LESEN CODIERTER INFORMATIONEN**

(30) Priorität: 10.11.2004 RU 2004132379
(71) Anmelder: Tsoy, Bronya, Moscow, 117342 (RU)
(72) Erfinder: TSOY, Bronya, Moscow, 117342 (RU); LAVRENTIEV, Vladimir Vladimirovich, Krasnodarsky krai, 353390 (RU)
(74) Vertreter: Kaiser, Magnus
(86) Internationale Anmeldenummer: PCT/RU2005/000186
(87) Internationale Veröffentlichungsnummer: WO 2006/052159

(57) **Zusammenfassung**

Die Erfindung betrifft die Informationstechnik, insbesondere Informationsschreib- und-lesesysteme und ist für Systeme zur langen Archivierung, digitale Geräte für die Schall- und Bildaufzeichnung, äussere Speicher der EDVA, den Gerätebau geeignet. Das technische Ergebnis besteht darin, dass eine Information auf Polymerfolien geschrieben und gelesen, der Schutz der Information gegen die Wirkung von elektromagnetischen, thermischen, elektrischen und Stralungs-Einflussgrössen verbessert und die Aufzeichnungsdichte der Information erhöht wird. Das Verfahren zum Schreiben und Lesen von Informationen umfasst die Beeinflussung des Informationsträgers durch einen Wärmefluss, eine Änderung dessen physikalisch-chemischer und molekularer Eigenschaften und eine nachfolgende Lesung der eingebrachten codierten Informationen. Der Informationsträger wird durch einen modulierten Wärmefluss beeinflusst und das Lesen wird durch eine Elektrisierung des Informationsträgers und die Erkennung der Abschnitte mit unterschiedlicher, von der Art des Modulationssignals abhängigen Oberflächendichte der aufgetragenen Ladung vorgenommen. Der gesamte Informationsträger wird einmalig vor der Lesung elektrisiert. Die elektrostatischen Ladungen werden auf den Informationsträger durch eine Sprühentladung aufgetragen. Als Informationsträger werden Polymerfolien eingesetzt. Die Polymerfolien sind zu einem Stapel aus typengleichen dünnen Einzelbauelementen in einer Menge von N > 2 zusammengefasst. Als Informationsträger werden Folien aus Polyimid eingesetzt.

## Beschreibung

### Technisches Gebiet

Die Erfindung bezieht sich auf die Informationstechnik, betrifft insbesondere Informationsschreib- und -lesesysteme und ist für Systeme zur langen Archivierung, digitale Geräte für die Schall- und Bildaufzeichnung, äussere Speicher der EDVA, den Gerätebau usw, geeignet.

### Stand der Technik

Bekannt ist bereits ein Verfahren zum Schreiben und Lesen von Informationen bei einer relativen Bewegung eines Informationsträgers und eines Umwandlers, bei welchem eine Information durch eine Abtastung oberhalb der Oberfläche der Registrierschicht des doppelschichtigen Informationsträgers mit Hilfe einer Nadel im Modus eines entsprechend dem vorgegebenen Code modulierten Tunnelstromes geschrieben wird, während das Lesen unter Zuhilfenahme eines abtastenden Laserstrahles mit einer Wellenlänge vorgenommen wird, bei welcher ein Fotoeffekt für nur eine Schicht des Informationsträgers, eine Verstärkung und eine Registrierung des Fotostromes bewirkt werden (siehe RU-Patent Nr. 2047916, 1995).

Nachteilig wirken sich bei dieser Methode eine geringe Aufzeichnungsdichte, ein erhöhter Verschleiss des Informationsträgers, eine geringe Lebensdauer der Informationsaufzeichnung und der Einsatz besonderer, teuerer Werkstoffe zur Herstellung von Informationsträgern aus.

Bekannt ist aber auch ein Verfahren zum Schreiben und Lesen von Informationen, bei dem auf einen geschlossenen Rahmen-Dünnfolienmagnetleiter eines Kombinationskopfes, welcher den Informationsträger über die gesamte Breite der jüngsten thermischen Wirkung berührt, ein kombinierter physikalischer Einfluss ausgeübt wird. Der Effekt, der durch eine thermomagnetische umkehrbare Störung der Magnetleitung im Bereich des Magnetleiters hervorgerufen wird, gestattet es, eine Information mittels eines Verfahrens zur üblichen magnetischen Aufzeichnung (Wiedergabe) zu schreiben und zu lesen. Eine opto-elektronische Abtastung des Kopfes geschieht dabei ohne mechanische Bewegung des letzteren (siehe Anmeldung Nr. 93053850, 1996).

Nachteile dieses Verfahrens sind eine niedrige Störungsstabilität und Informationsspeicherung auf einem Magnetträger, eine Empfindlichkeit der Information gegen die Wirkung der äusseren elektromagnetischen Felder, der hohen Temperaturen und einer durchdringenden Strahlung. Nachteilig wirkt sich auch die Kompliziertheit bei der Herstellung eines ferromagnetischen Informationsträgers aus.

Bekannt sind weiters ein Verfahren und eine Vorrichtung zum Schreiben und Lesen von Informationen, wobei die Vorrichtung eine Elektronenquelle und eine Speicherzelle aufweist. Das Schreiben einer Information erfolgt bei Anwendung eines Elektronenbündels, das auf eine fokussierende elektrostatische Linse mit Bremselektroden und Elektroden für eine elektronische Abtastung für die Speicherzelle auf Grundlage eines nanokristallischen, mit Rhodium- oder Kobaltsatomen legierten Siliziums gerichtet ist. Das Lesen der Information geschieht durch die Abtastung der Oberfläche einer Folie aus dem nanokristallischen Silizium mittels eines elektronischen Strahles und durch eine elektronische Invertierung eines Signals. Gelöscht wird die Information durch das Anlegen der Spannung eines elektrischen Feldes an die Folie (siehe Anmeldung Nr. 2001134736).

Nachteil der vorstehend beschriebenen Methode zum Schreiben und Lesen von Informationen sind die Kompliziertheit deren Durchführung, hohe Kosten, die Kompliziertheit der Herstellung des Informationsträgers, die Empfindlichkeit der geschriebenen Information gegen äussere elektrische und Strahlungsfelder.

Bekannt ist ferner ein Verfahren zum Schreiben und Lesen von digitalen Informationen mittels eines elektrischen Feldes auf einem Injektions-Informationsträger. Gemäss diesem Verfahren erfolgt das Schreiben mittels eines zweipoligen elektrischen Impulsfeldes über ein Elektroden-Mehrelementsystem auf einen rotierenden scheibenförmigen Informationsträger, der aus einem Halbleitermaterial besteht, das mit einer dünnen dielektrischen Folie beschietet ist. Die Wiedergabe erfolgt über dasselbe Elektrodensystem durch die Erkennung eines Unterschiedes der kapazitiven Kopplung zwischen den Elektroden und dem Disk, welche Kopplung von der Spannungspolarität des aufzuzeichnenden Impulses abhängig ist (siehe RU-Patent Nr. 2006075, 1994).

Ein Nachteil dieses Verfahrens sind eine sehr kurze Zeit der Informationsspeicherung auf dem Informationsträger, die Kompliziertheit der Herstellung und hohe Kosten des Halbleiter-Informationsträgers, die Empfindlichkeit der Informationen selbst gegen die Wirkung von Wärme-, elektrischen und Strahlungsfeldern, eine geringe Aufzeichnungsdichte von Informationen.

Bekannt ist ein Verfahren zum Schreiben von Informationen auf Polymerfolien (Polypropylen, Polyethylen) durch deren Bestrahlung mit einem Laser-Lichtbündel in einem IR-Bereich. Nach der Beeinflussung des Informationsträgers durch den Laser bildet sich darauf ein Fleck mit einem geringen Reflexionsfaktor und einem hohen Durchlassgrad. Die Beeinflussung durch den Laser dauert 10⁻³ s. Das Lesen der Information erfolgt durch die Zuführung und den Empfang des Lichtbündels zu den Spuren des Informationsträgers (siehe RU-Patent Nr. 2125741,1999).

Ein Nachteil dieses Verfahrens sind eine niedrige Aufzeichnungsdichte, der Einsatz einer mikroporösen Folie als Informationsträgers, ein schwacher Schutz der Information gegen äussere Einflussgrössen, wie z. B. hohe Temperaturen, Sonnenlicht, Strahlung.

Bekannt ist ein Verfahren zum Schreiben und Lesen von codierten Informationen. Bei diesem Verfahren ändert man örtlich die elektrophysikalischen Eigenschaften der Oberfläche des Werkstoffes eines Informationsträgers durch eine Änderung der Magnetisierung eines magnetooptischen Elementes des Informationsträgers. Das Lesen der Informationen geschieht mittels einer Lichtquelle, eines Polarisators, eines magnetoempfindlichen Elementes und eines Analysators, welche optisch untereinander verbunden sind. Dabei ist der Informationsträger als magnetooptische Folie mit einer Zellstruktur ausgebildetr (siehe RU-Patent Nr. 2022365, 1994).

Ein Nachteil dieses Verfahrens sind die Kompliziertheit der Informationslesung, die Empfindlichkeit der Information gegen äussere magnetische, elektrische, thermische und andere Felder.

### Darstellung der Erfindung

Die vorliegende Erfindung zielt auf die Behebung der vorerwähnten Nachteile der bekannten Verfahren ab. Das technische Ergebnis besteht darin, dass eine Information auf Polymerfolien geschrieben und gelesen, der Schutz der Information gegen die Wirkung von elektromagnetischen, thermischen, elektrischen und Stralungs-Einflussgrössen verbessert und die Aufzeichnungsdichte der Information erhöht wird.

Das Wesentliche des Verfahrens ist wie folgt. Es steht fest, dass bei einer kurzen Beeinflussung von Polymerfolien, einschl solchen aus Polyimiden, durch die Wärme darin Strukturveränderungen auf dem Molekularniveau vor sich gehen, welche die Fähigkeit zur Aufnahme von elektrostatischen Ladungen bei deren Auftragen durch eine Sprühentladung ändern. Dieser Vorgang liegt dem vorgeschlagenen Verfahren zum Schreiben und Lesen von Informationen zugrunde, welchem zufolge der Informatuionsträger durch einen modulierten Wärmefluss beeinflusst wird und die physikalisch-chemischen und molekularen Eigenschaften des Informationsträgers ohne Schmelzen dessen Abschnitte verändert werden, während das Lesen durch die Elektrisierung des Informationsträgers und die Erkennung der Abschnitte mit unterschiedlicher Oberflächendichte der aufgebrachten Ladung, welche Oberflächendichte von der Art des Modulationssignals abhängt, vorgenommen wird. Um dabei die Stabilität der geschriebenen Information gegen die Wirkung der Radiation, der erhöhten Temperaturen und gegen eine elektromagnetische Strahlung od. dgl. zu verbessern, besteht der Informationsträger, also eine Polymerfolie ohne irgendwelche aufgedampfte metallische reflektierende Schicht, aus weit und breit in der Elektronik verwendetem Polyimid, während zur Erhöhung der Fähigkeit zur Aufnahme von Ladungen (der Grösse der ursprünglichen Ladungsdichte) und zur Kürzung dessen Relaxationszeit der Informationsträger aus einem Stapel (Stoss) von typengleichen dünnen Einzelfolien besteht. Der Informationsträger kann dabei sich gegenüber dem Sensor als herkömmliches Magnetband bewegen und auch einen Disk mit einer üblichen spiralförmigen Aufzeichnung darstellen.

Das vorgerschlagene Verfahren zum Schreiben und Lesen von Informationen ermöglicht es, Informationen auf Polymerfolien (biegsamen Informationsträgern) zu schreiben und zu lesen, den Schutz der Informationen gegen die Wirkung von elektromagnetischen, thermischen, Schlag-, Explosions- und Strahlungs-Einflussgrössen zu verbessern, die Aufzeichnungsdichte von Informationen bis auf das Molekularniveau zu erhöhen. Dabei entfallen die Metallisierung einer der Oberflächen zur Bildung einer lichtreflektierenden Schicht und die Schmelzung der Oberflächenschicht des Informationsträgers zur Schaffung von Vertiefungen, d. h. es wird möglich, die Leistung einer Laserstrahlung zu senken, was seinerseits eine starke Vereinfachung und Verbilligung sowohl der Herstellung der Informationsträger selbst, als auch des Informationsaufzeichnungs- und -lesungsvorganges nach sich zieht.

Die Gesamtheit der vorstehend beschriebenen Eigenschaften des vorliegenden Verfahrens zum Schreiben und Lesen von Informationen auf biegsamen Informationsträgern ermöglicht dessen Einsatz unter extremen Bedingungen. So halten die nach dem vorgeschlagenen Verfahren geschriebenen Informationen einem Kochen in Wasser, den Temperaturgefällen zwischen -100 und +200 °C, einer Radiation bei einer Atomexplosion, den Schlagbelastungen bei herkömmlichen Explosionen, einer langwierigen Wirkung der Einflussgrössen des Weltraumes stand und sind kratzfester als übliche CDs od.dgl.

### Kurze Beschreibung der Zeichnungen

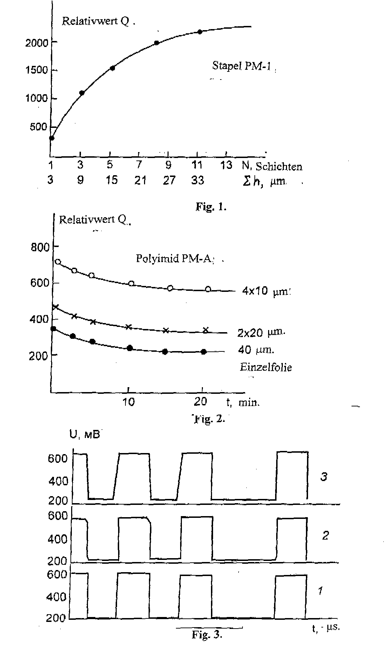

Die Erfindung wird anhand der Diagramme gemäss den Figuren 1 bis 3 veranschaulicht.

Fig. 3 zeigt Oszilogramme für ein auf einer Folie aus dem Polyimid PM-1 geschriebenes Signal. Die Kurve 1 betrifft ein Signal, das 1 Stunde nach der Aufzeichnung gemessen wurde.

Die Kurve 2 betrifft ein Signal bei Anwendung derselben Folie, die in Wasser 1 Stunde lang gekocht wurde.

Die Kurve 3 betrifft ein Signal bei Anwendung derselben Folie, welche einer GammaStrahlung bei einer Dose bis 200 Mrad ausgesetzt wurde.

### Ausführungsformen der Erfindung

Wie aus den aufgeführten Beziehungen erkenntlich ist, verursacht die Beeinflussung des entsprechend der vorgeschlagenen Methode geschriebenen Signals durch extreme Einflussgrössen, wie Radiation, Temperaturen, Wasserbehandlungen, kein Löschen der geschriebenen Informationen, was die Erzielung des gewünschten technischen Ergebnisses nachweist.

Das Verfahren zum Schreiben und Lesen von codierten Informationen beruht auf der Beeinflussung des lnformationsträgers durch einen Wärmefluss, erzeugt z. B. von einem Laser, und auf der Veränderung dessen Eigenschaften. Das Verfahren beinhaltet die Beeinflussung des Informationsträgers durch einen modulierten Wärmefluss bis auf eine Änderung der physikalisch-chemischen und molekularen Eigenschaften des Informationsträgers ohne Schmelzen dessen Abschnitte, wobei die Lesung durch eine Elektrisierung des Informationsträgers und die Erkennung der Abschnitte mit unterschiedlicher Oberflächendichte der aufgetragenen Ladung stattfindet, welche Oberflächendichte von der Art des Modulationssignals abhängig ist.

Der gesamte Informationsträger wird einmalig vor der Lesung elektrifiziert.

Elektrostatische Ladungen werden auf den Informationsträger mittels einer Sprühentladung aufgetragen.

Als Informationsträger kommen Polymerfolien in Frage.

Die Polymerfolien sind zu einem Stapel aus typengleichen dünnen Einzelbauelementen in einer Menge von N > 1 zusammengefasst.

Als Informationsträger werden Folien aus Polyimid eingesetzt.

Eine Polyimidfolie (PM-1) wird durch ein Giessverfahren unter Anwendung des Polyimidlackes AD-9103, der ausgehend von einer Dimethylformamid-Lösung hergestellt ist, erzeugt.

Die polyimidfolie ist durchsichtig, ihre Farbe ändert sich je nach der Dicke von dunkelgelb bis hin zu hellbraun.

Die Folie PM-1 zeichnet sich durch hohe physikalisch-mechanische Eigenschaften aus, Sie bleibt in einem breiten Temperaturbereich elastisch, weist eine hohe Ermüdigungsbeständigkeit und Lebensdauer sowie ein niedriges Kriechen auf. Die Polyimidfolie zählt zu Antifriktionsmaterialien. Sie ist in organischen Lösungsmitteln nicht löslich, ölbeständig und wird unter Einwirkung von konzentrierten Säuren und Alkalien zersetzt (hydrolisiert). Sie hat eine hohe Beständigkeit gegen Bestrahlung.

Die grundsätzliche Besonderheit dieses Werkstoffes zeigt sich in dessen Fähigkeit zur Erhaltung der mechanischen und Elektroisoliereigenschaften in einem breiten Temperaturbereich (von -200 bis +400 °C).

Polyimidfolien als Isolierwerkstoff finden im Flugwesen, der Elektrotechnik, der Rundfunkmechanik und in vielen anderen Industriezweigen eine breite Anwendung. Deren Verwendung als Elektroisolation gestattet es, die spezifische Leistung und die Betriebssicherheit von elektrischen Maschinen, Mechanismen und Geräten zu verbessern, deren Betriebstemperatur zu erhöhen und deren Volumen und Gewicht zu verringern, Die Folie lässt sich gut metallisieren.

Grundsätzliche Anwendungsgebiete : Produktion von Folienmaterialien und Integrierschaltungen ; gedruckte Leiterplatten und Magnetbänder.

**Hauptsächliche physikalisch-mechanische und elektrische Eigenschaften der Polyimidfolie PM-1**

| Eigenschaften | Werte |
|---|---|
| Dielektrischer Verlustfaktor bei 10³ Hz | 0,0025 bis 0,003 |
| Spezifischer Volumenwiderstand, Ohm. m | 10¹⁴ bis 10¹⁵ |
| Wärmeleitzahl, W/m. K | 0,14 bis 0,20 |
| Spezifische Wärmekapazität von 20 bis 300 °C, J/kg . K | 10¹⁴ bis 10¹⁵ |
| Linearer Wärmeausdehnungskoeffizient (20 bis 250)° C | (20 bis 30) . 10¹⁵ |

## Patentansprüche

1. Verfahren zum Schreiben und Lesen von codierten Informationen, welches eine Beeinflussung des Informationsträgers durch einen Wärmefluss, eine Änderung dessen physikalisch-chemischer und molekularer Eigenschaften und eine nachfolgende Lesung der eingebrachten codierten Informationen umfasst, wobei der Informationsträger durch einen modulierten Wärmefluss beeinflusst wird und das Lesen durch eine Elektrisierung des Informationsträgers und die Erkennung der Abschnitte mit unterschiedlicher, von der Art des Modulationssignals abhängigen Oberflächendichte der aufgetragenen Ladung vorgenommen wird.

2. Verfahren nach Anspruch 1, **dadurch gekennzeichnet, dass** der gesamte Informationsträger einmalig vor der Lesung elektrisiert wird.

3. Verfahren nach Anspruch 1, **dadurch gekennzeichnet, dass** elektrostatische Ladungen auf den Informationsträger durch eine Sprühentladung aufgetragen werden.

4. Verfahren nach Anspruch 1, **dadurch gekennzeichnet, dass** als Informationsträger Polymerfolien eingesetzt werden.

5. Verfahren nach einem der Ansprüche 1 bis 3, **dadurch gekennzeichnet, dass** die Polymerfolien zu einem Stapel aus typengleichen dünnen Einzelbauelementen in einer Menge von N > 2 zusammengefasst sind.

6. Verfahren nach Anspruch 1, **dadurch gekennzeichnet, dass** als Informationsträger Folien aus Polyimid eingesetzt werden.
